# EUROPEAN PATENT SPECIFICATION

(11) **EP 4 194 129 B1**
(45) Date of publication and mention of the grant of the patent: **21.01.2026**
(21) Application number: 22211773.1
(22) Date of filing: 06.12.2022
(51) Int. Cl.: B23D 59/00, B23Q 11/00

(54) **SUCTION HOOD AND MACHINE WITH SUCTION UNIT**
SAUGHAUBE UND MASCHINE MIT SAUGEINHEIT
CAPOT D'ASPIRATION ET MACHINE AVEC UNITÉ D'ASPIRATION ET

(30) Priority: 13.12.2021 IT 202100031121
(43) Date of publication of application: 14.06.2023
(73) Proprietor: SCM GROUP S.P.A., 47921 Rimini (IT)
(72) Inventor: SOTTORIVA, Matteo, 47921 RIMINI (RN) (IT)
(74) Representative: Tiburzi, Andrea

(56) References cited:
- WO-A1-2015/102906
- WO-A1-2020/115599
- IT-A1- MO20 070 245
- US-A1- 2008 006 344

## Description

The present invention relates to an aspiration hood and to a machine for working pieces in wood or other materials, comprising an improved suction unit.

### Field of the invention

In more detail, the invention relates to a pass-through machine, comprising an improved suction unit designed to improve the extraction of the chips and dust emitted during machining by means of tools.

In the following, the description will be directed to an edge banding machine, designed and built for finishing narrow edges of wooden panels or other materials, and to an extraction hood, but it is quite clear that the same should not be considered limited to this use specific.

### Prior art

As is well known, there are currently pass-through machines, such as edge banding machines, in which a piece, in particular a panel made of wood, composite material, plastic, chipboard, or other material, is moved in an advancement direction and is subject, as it advances, to various machining, such as grinding, edge gluing, end milling, trimming, edge gleaning, edge rounding, edge scraping and scraping off any glue excess.

Some of these processes are performed with rotary tools, such as a cutter or a blade. Said rotary tools generate, during machining, a jet of waste material, shavings and/or dust, mixed with other materials, for example, glue, having a substantially tangential direction to the tool, in correspondence with the contact area between the rotary tool himself and the piece.

Said rotary tools, in pass-through machines, can work in a concordant or discordant way. In the first case, the rotation motion of the tool proceeds in the same direction as the linear advance motion of the panel; in the second case, on the other hand, the rotational motion of the tool proceeds in the opposite direction with respect to the linear advancement motion of the panel. When the machining is discordant, the jet of waste material is directed in the opposite direction to the advancement direction of the panel.

The indicated machines are generally equipped with suction units or apparatuses, generally comprising suction hoods, arranged to convey and suck up said jet of waste material.

Said known suction units do not completely convey the aforesaid jet of waste material, causing spills, which are dangerous for the operators and which can jeopardize the correct functioning of the machine.

The relevant prior art also comprises the patent application WO2015/102906 A1, which discloses the preamble of claim 1.

Furthermore, since the jet of waste material can include shavings and other materials, such as glue, for example, it can remain attached to the walls of the suction hood, causing it to clog over time and jeopardizing the correct operation of the unit. It appears clear that this is detrimental for the machine user, who is forced to interrupt production to free the hood and restore the correct suction.

### Scope of the invention

In light of the above, the object of the present invention is therefore to prevent the clogging of suction hoods associated with machines for working pieces made of wood, plastic, composite materials, or the like, equipped with rotary tools, which generate a jet of waste material, chips or dust, mixed with other materials, for example glue.

Another object of the invention is to improve the suction, by said hoods, of said jet of waste material, generated during the machining of said pieces.

### Object of the invention

According to the invention, there is provided a suction hood defined by the features of claim 1, and a machine comprising such a suction hood, said machine being defined by the features of claim 3.

Always according to the invention, said body may define a collection volume, and said diffusion unit may be arranged inside of said collection volume.

Still according to the invention, said suction hood may be arranged near said working tool, and may have an entrance opening, for collecting said jet of waste material.

Advantageously according to the invention, said diffusion unit may comprise at least one nozzle for entering said fluid flow.

Further according to the invention, said diffusion unit may have a slotted surface, for diffusing said fluid flow, producing said diffused flow and orienting it towards said deflection surface, increasing its velocity.

Preferably according to the invention, said diffusion unit may have a chamber.

Always according to the invention, said diffusion unit may be integrated in said suction hood.

Still according to the invention, said suction hood may comprise an exit duct, connected to said exit opening of said body of said suction hood, and a pump for suctioning said jet of waste material, intercepted by said deflection surface and for conveying it towards said exit conduit.

Advantageously according to the invention, said machine may comprise a supporting plane for said piece, and said deflection surface of said body of said suction hood may be tilted with respect to said supporting plane so as to deflect said jet of waste material towards said exit opening.

Further according to the invention, said deflection surface of said body of said suction hood may be concave and is directed so as to intercept said jet of waste material for deflecting it towards said exit opening.

Preferably according to the invention, said piece and said working tool may have relative motion.

Always according to the invention, said body may have a seat for housing said working tool, so that said working tool and said suction hood are integral.

Always according to the invention, said body may have a seat in which said working tool can be housed, so that said working tool and said suction hood are integral.

### Brief description of the figures

The present invention will be now described, for illustrative but not limitative purposes, according to its preferred embodiments, with particular reference to the figures of the enclosed drawings, wherein:

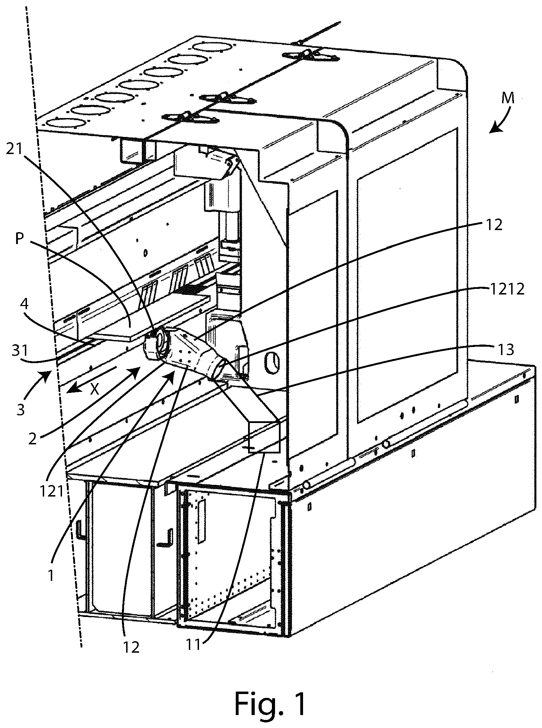

figure 1 shows a perspective view of a part of a woodworking machine equipped with a suction unit object of the present invention;

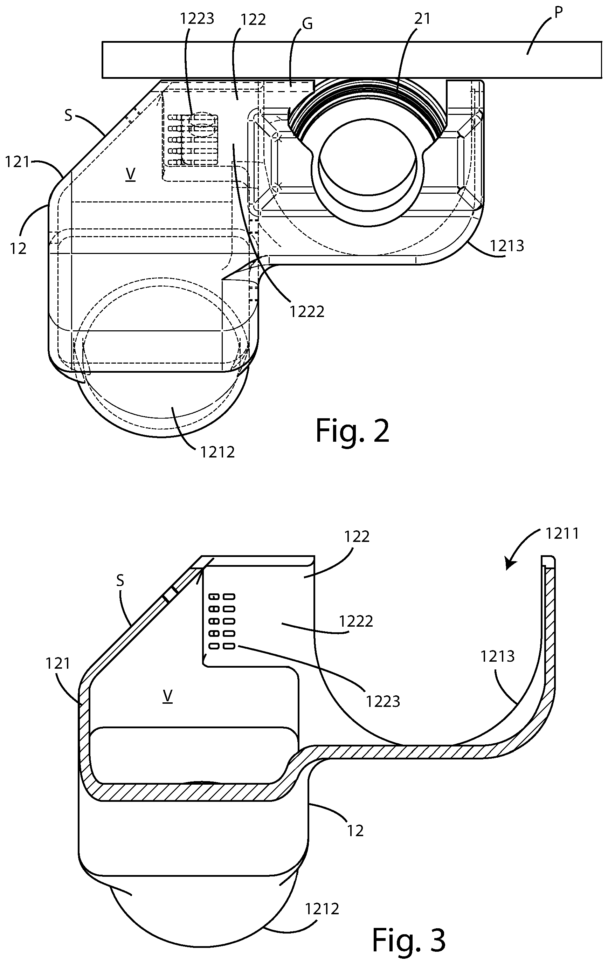

figure 2 shows a front view, in transparency, of a detail of said suction unit;
figure 3 shows a front view of the same detail shown in figure 2;

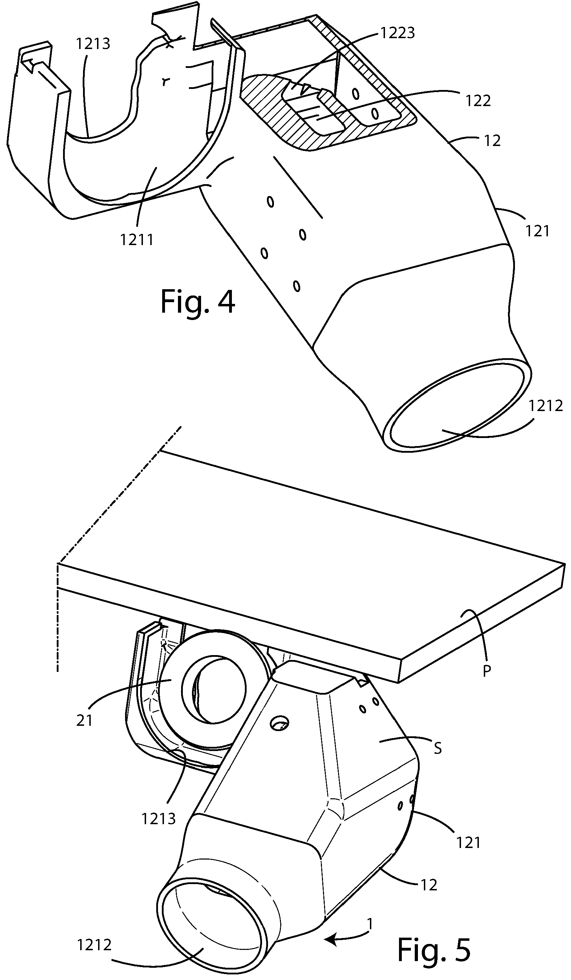

figure 4 shows an axonometric view of the same detail shown in figure 2; and
figure 5 shows a further axonometric view of the same detail shown in figure 2.

### Detailed description

In the various figures, similar parts will be indicated with the same reference numbers.

With reference to the attached figures, a machine M can be observed, with a suction unit 1 according to the present invention, in particular a pass-through machine, for edging a piece P, for example, a wooden panel, comprising a suction unit 1, a working unit 2, means 3 for handling said piece P, and a supporting plane 4 for said piece P. Machines of this type are also known in the sector as edge banding machines.

Said handling means 3 comprises a conveyor belt 31, which allows the advancement of said piece P along an advancement direction X, so that said piece P can be subjected to various machining. In further embodiments said handling means 3 comprise a belt or transport rollers. In particular, in the edge banding machines M such as the one described in the present embodiment, the machining can be grinding, gluing the edge, end milling, trimming, gleaning the edge, rounding the edge, scraping the edge and scraping off any glue excess. These machining are carried out by specific working groups or units generally arranged in series on one side of the conveyor belt 31. In other embodiments, various series of different machining groups or units can be provided, according to the technical machining requirements.

In general, considering the woodworking machines, some working groups or units can provide for the generation of jets of shavings and dust, such as waste. In particular, said working unit 2 comprises a machining tool 21, in particular a rotary tool, for example, a milling cutter, for machining at least one narrow side of said piece P, to perform, for example, the gleaning step, which generates a jet of waste material G during said machining.

Furthermore, near said working unit 2 is said suction unit 1, to intercept, suck up and drag the machining residues, i.e., said shavings and dust, which constitute, as mentioned, said jet of waste material G.

Said suction unit 1 comprises a suction hood 12, which has a body 121, internally hollow, so as to delineate a collection volume V, in which said body 121 has an entrance opening 1211, oriented so as to intercept said jet of waste material G coming, in use, from said rotary tool 21, and arranged so as to partially surround said rotary tool 21, an outlet opening 1212, from which said jet of waste material G is sucked, and a seat 1213 for housing said rotary tool 21, so that said rotary tool 21 and said suction hood 12 are integral, i.e. have common movement axes.

Said suction hood 12 also comprises a deflection surface S, obtained on said body 121 and located so as to partially delimit said collection volume V. Said deflection surface S is inclined with respect to the direction of said support surface 4, to divert said jet of waste material G, coming, when the machine M is in use, from said rotary tool 21, towards said outlet opening 1212.

Said suction hood 12 also comprises a diffusion unit 122, formed, in the embodiment illustrated, in said body 121, which has a nozzle 1221 for the entry of a flow of fluid A, in particular compressed air or air, and a chamber 1222, equipped with a slotted surface 1223, from which a diffused flow D of fluid, especially compressed air, comes out.

Said slotted surface 1223 is oriented so that the diffused flow D is directed, in use, towards said deflection surface S, as better explained below.

In another embodiment said diffusion unit 122 comprises a plurality of nozzles for the inlet of a fluid flow.

In a further embodiment, said diffusion unit 122 comprises at least one nozzle, for the inlet of a fluid flow, which can be orientated, so as to vary the direction of said fluid flow.

Said suction unit 1 also comprises an exit conduit 13, coupled to said outlet opening 1212. Furthermore, said suction unit 1 comprises a pump 11, for sucking up said jet of waste material G, intercepted by said deflection surface S through said exit conduit 13.

The operation of the machine M with the improved suction unit described above is as follows.

Said piece P, which in the particular embodiment is a panel of wood or similar materials, is moved by said handling means 3 along said advancement direction X.

In the embodiment described, the gleaning machining is of the discordant type, i.e. said rotary tool 21, able to perform the gleaning of at least one narrow side of said piece P, rotates in the opposite direction with respect to the linear advancement motion of the panel P along the X direction, generating a jet of waste material G, therefore directed in the opposite direction with respect to the advancement direction of the panel.

Said jet of waste material G is sucked up by said suction unit 1, through the actuation of the pump 11. In particular, the jet of waste material G enters the suction hood 12 through the entrance opening 1211.

The jet of waste material G is thus intercepted, for the most part, by the deflection surface S, and is deflected towards the outlet opening 1212.

Said jet of waste material G, in the embodiment illustrated, comprises chips mixed with glue used for the application of an edge to the panel P, therefore it can stick by adhesion inside the suction hood 12, in particular on the deflection surface S.

Inside the chamber 1222 of said diffusion unit 122, which, as mentioned, is integrated in the body 121 of said suction hood 12, a flow of compressed air A is injected through the nozzle 1221.

Said diffusion unit 122 diffuses said flow of compressed air A thorough said slotted surface 1223, increasing its speed, due to the fact that the flow of compressed air A passes from a surface with a larger section, when it is in the chamber 1222, to a surface with a smaller section when it passes inside the slots of the slotted surface 1223.

Outgoing from said slotted surface there is therefore a diffused flow D of compressed air, which is directed towards said deflection surface S of said suction hood 12.

Said diffused flow D, impinging on said deflection surface S, ne removes any residues of said jet of waste material G, produced following processing by said rotary tool 21, which represents a possible cause of clogging of said suction hood 12.

Furthermore, said diffused flow D facilitates the conveyance of said jet of waste material G, towards said exit conduit 13 by said pump 11, since it helps to direct it towards the open outlet port 1212.

In a further embodiment, said deflection surface S, of said suction hood 12, has a concavity, directed so as to intercept said jet of waste material G, to improve its deflection towards said outlet opening 1212 of said suction hood 12.

In another embodiment said diffusion unit 122, included in said suction hood 12, is an element distinct from said body 121, made of the same material as the suction hood 12 or in a different material.

The invention can also be used in machines of different types with respect to the one described, for example in machining centers for working pieces made of wood, plastic, composite material, or the like, in which said pieces are stationary, and at least one machining head, equipped of at least one tool, is movable in translation and/or rotation with respect to said pieces.

### Advantages

An advantage of the present invention is that of avoiding the clogging of suction hoods associated with machines for processing pieces made of wood, plastic, composite materials, or other materials, equipped with rotary tools which generate a jet of waste material, such as chips, mixed with other materials, especially glue.

Another advantage of the present invention is that of facilitating the conveyance of said jet of waste material by said suction hoods.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Suction hood (12) for suctioning a jet of waste material (G), generated during working of pieces made of wood, plastic, composite material or the like by means of a working tool (21) having
a body (121), comprising a deflection surface (S), arranged so as to intercept, in use, said jet of waste material (G), and
an entrance opening (1211) for collecting, in use, said jet of waste material (G) and an outlet opening (1212),
**characterized**
**in that** it comprises a diffusion unit (122), capable of being supplied by a compressed air flow (A), wherein said diffusion unit (122) diffuses, in use, said compressed air flow (A), producing a diffused flow (D) and orienting said diffused flow (D) on said deflection surface (S), so as to remove from said deflection surface (S) any residual of said jet of waste material (G) produced as a result of the working of pieces made of wood, plastic, composite material or the like, and to convey said jet of waste material (G) towards said outlet opening (1212), and
**in that** said diffusion unit (122) comprises at least one nozzle (1221) for entering said compressed air flow (A).

2. Suction hood (12) according to the preceding claim, **characterized in that** said body (121) has a seat (1213) in which said working tool (21) can be housed, so that said working tool (21) and said suction hood (12) are integral.

3. Machine (M) for working a work piece (P), such as a piece made of wood, plastic, composite material or the like, comprising
at least one working tool (21), that generates a jet of waste material (G) during said working on said piece (P), and
at least one suction unit (1) for suctioning said jet of waste material (G), wherein said suction unit (1) comprises a suction hood (12) according to claim 1 or 2

4. Machine (M) according to the preceding claim, **characterized**
**in that** said body (121) defines a collection volume (V), and
**in that** said diffusion unit (122) is arranged inside of said collection volume (V).

5. Machine (M) according to any one of the preceding claims 3 or 4, **characterized in that** said suction hood (12) is arranged near said working tool (21), and has an entrance opening (1211), for collecting said jet of waste material (G).

6. Machine (M) according to any one of the preceding claims 3-5 **characterized in that** said diffusion unit (122) has a slotted surface (1223), for diffusing said compressed air flow (A), producing said diffused flow (D) and orienting it towards said deflection surface (S), increasing its velocity.

7. Machine (M) according to any one of the preceding claims 3-6, **characterized in that** said diffusion unit (122) has a chamber (1222).

8. Machine (M) according to any one of the preceding claims 3-7, **characterized in that** said diffusion unit (122) is integrated in said suction hood (12).

9. Machine (M) according to any one of the preceding claims 3-8, **characterized in that** said suction hood (1) comprises
an exit duct (13), connected to said outlet opening (1212) of said body (121) of said suction hood (12), and
a pump (11) for suctioning said jet of waste material (G), intercepted by said deflection surface (S) and for conveying it towards said exit conduit (13).

10. Machine (M) according to any one of the preceding claims 3-9, **characterized**
**in that** it comprises a supporting plane (4) for said piece (P), and
**in that** said deflection surface (S) of said body (121) of said suction hood (12) is tilted with respect to said supporting plane (4) so as to deflect said jet of waste material (G) towards said outlet opening (1212).

11. Machine (M) according to any one of the preceding claims 3-10 **characterized in that** said deflection surface (S) of said body (121) of said suction hood (12) is concave and is directed so as to intercept said jet of waste material (G) for deflecting it towards said outlet opening (1212).

12. Machine (M) according to any one of the preceding claims 3-11, **characterized in that** said piece (P) and said working tool (21) have relative motion.

13. Machine (M) according to any one of the preceding claims 3-12 **characterized in that** said body (121) has a seat (1213) for housing said working tool (21), so that said working tool (21) and said suction hood (12) are integral.

## Patentansprüche

1. Absaughaube (12) zum Absaugen eines Strahls von Abfallmaterial (G), der während der Bearbeitung von Teilen aus Holz, Kunststoff, Verbundmaterial oder dergleichen mittels eines Bearbeitungswerkzeugs (21) erzeugt wird,
das einen Körper (121) aufweist, der eine Ablenkfläche (S) umfasst, die so angeordnet ist, dass sie im Gebrauch den Strahl von Abfallmaterial (G) auffängt, und
eine Eintrittsöffnung (1211) zum Auffangen des Abfallstrahls (G) und eine Austrittsöffnung (1212),
**dadurch gekennzeichnet**
**dass** sie eine Diffusionseinheit (122) umfasst, die mit einem Druckluftstrom (A) versorgt werden kann, wobei die Diffusionseinheit (122) im Betrieb den Druckluftstrom (A) diffundiert, einen diffusen Strom (D) erzeugt und den diffusen Strom (D) auf der Ablenkfläche (S) ausrichtet, um von der Ablenkfläche (S) jegliche Reste des Strahls aus Abfallmaterial (G) zu entfernen, die als Ergebnis der Bearbeitung von Teilen aus Holz, Kunststoff, Verbundmaterial oder dergleichen erzeugt werden, und um den Strahl aus Abfallmaterial (G) zu der Auslassöffnung (1212) zu befördern, und
**dass** die Diffusionseinheit (122) mindestens eine Düse (1221) für den Eintritt in den Druckluftstrom (A) umfasst.

2. Absaughaube (12) gemäß dem vorstehenden Anspruch, **dadurch gekennzeichnet, dass**
der Körper (121) einen Sitz (1213) aufweist, in dem das Arbeitswerkzeug (21) untergebracht werden kann, so dass das Arbeitswerkzeug (21) und die Absaughaube (12) eine Einheit bilden.

3. Maschine (M) zur Bearbeitung eines Werkstücks (P), wie z.B. eines Werkstücks aus Holz, Kunststoff, Verbundmaterial oder dergleichen, mit
mindestens ein Bearbeitungswerkzeug (21), das während der Bearbeitung des Werkstücks (P) einen Strahl von Abfallmaterial (G) erzeugt, und
mindestens eine Absaugeinheit (1) zum Absaugen des Abfallstrahls (G), wobei die Absaugeinheit (1) eine Absaughaube (12) nach Anspruch 1 oder 2 umfasst.

4. Maschine (M) gemäß dem vorstehenden Anspruch, **dadurch gekennzeichnet**
dadurch, dass der Körper (121) ein Sammelvolumen (V) definiert, und
dadurch, dass die Diffusionseinheit (122) innerhalb des Sammelvolumens (V) angeordnet ist.

5. Maschine (M) gemäß einem der vorstehenden Ansprüche 3 oder 4, **dadurch gekennzeichnet**
**dass** die Absaughaube (12) in der Nähe des Arbeitswerkzeugs (21) angeordnet ist und eine Eintrittsöffnung (1211) zum Auffangen des Strahls von Abfallmaterial (G) aufweist.

6. Maschine (M) gemäß einem der vorstehenden Ansprüche 3-5 gekennzeichnet
dass die Diffusionseinheit (122) eine geschlitzte Oberfläche (1223) aufweist, um den Druckluftstrom (A) zu diffundieren, den diffundierten Strom (D) zu erzeugen und ihn auf die Ablenkfläche (S) auszurichten, wodurch seine Geschwindigkeit erhöht wird.

7. Maschine (M) gemäß einem der vorstehenden Ansprüche 3-6, **dadurch gekennzeichnet**
dadurch, dass die Diffusionseinheit (122) eine Kammer (1222) aufweist.

8. Maschine (M) gemäß einem der vorstehenden Ansprüche 3-7, **dadurch gekennzeichnet**
dadurch, dass die Diffusionseinheit (122) in die Absaughaube (12) integriert ist.

9. Maschine (M) gemäß einem der vorstehenden Ansprüche 3-8, **dadurch gekennzeichnet**
**dass** die Absaughaube (1) umfasst
eine Ausgangsleitung (13), die mit der Auslassöffnung (1212) des Körpers (121) der Absaughaube (12) verbunden ist, und
eine Pumpe (11) zum Ansaugen des von der Ablenkfläche (S) aufgefangenen Abfallstrahls (G) und zum Fördern desselben in Richtung der Ausgangsleitung (13).

10. Maschine (M) gemäß einem der vorstehenden Ansprüche 3-9, **dadurch gekennzeichnet**
dadurch, dass sie eine Auflagefläche (4) für das Teil (P) aufweist, und
dass die Ablenkfläche (S) des Körpers (121) der Absaughaube (12) in Bezug auf die Stützebene (4) geneigt ist, um den Abfallstrahl (G) in Richtung der Auslassöffnung (1212) abzulenken.

11. Maschine (M) gemäß einem der vorstehenden Ansprüche 3-10, **dadurch gekennzeichnet, dass**
dass die Ablenkfläche (S) des Körpers (121) der Absaughaube (12) konkav ist und so ausgerichtet ist, dass sie den Strahl des Abfallmaterials (G) abfängt, um ihn zur Auslassöffnung (1212) abzulenken.

12. Maschine (M) gemäß einem der vorstehenden Ansprüche 3-11, **dadurch gekennzeichnet, dass**
dass das Werkstück (P) und das Arbeitswerkzeug (21) eine Relativbewegung ausführen.

13. Maschine (M) gemäß einem der vorstehenden Ansprüche 3-12, **dadurch gekennzeichnet**
**dass** der Körper (121) einen Sitz (1213) zur Aufnahme des Arbeitswerkzeugs (21) aufweist, so dass das Arbeitswerkzeug (21) und die Absaughaube (12) eine Einheit bilden.

## Revendications

1. Capot d'aspiration (12) pour l'aspiration d'un jet de déchets (G), généré lors du travail de pièces en bois, plastique, matériau composite ou similaire au moyen d'un outil de travail (21)
ayant un corps (121), comprenant une surface de déviation (S), disposé de manière à intercepter, en cours d'utilisation, ledit jet de déchets (G), et
une ouverture d'entrée (1211) pour recueillir, en cours d'utilisation, ledit jet de déchets (G) et une ouverture de sortie (1212),
**caractérisé**
**en ce qu'**il comprend une unité de diffusion (122), pouvant être alimentée par un flux d'air comprimé (A), dans laquelle ladite unité de diffusion (122) diffuse, en cours d'utilisation, ledit flux d'air comprimé (A), produisant un flux diffusé (D) et orientant ledit flux diffusé (D) sur ladite surface de déflexion (S), de manière à éliminer de ladite surface de déviation (S) tout résidu dudit jet de déchets (G) produit à la suite du travail de pièces en bois, en plastique, en matériau composite ou autre, et à acheminer ledit jet de déchets (G) vers ladite ouverture de sortie (1212), et en ce que ladite unité de diffusion (122) comprend au moins une buse (1221) pour entrer dans ledit flux d'air comprimé (A).

2. Capot d'aspiration (12) selon la revendication précédente, **caractérisé en ce que**
ledit corps (121) comporte un siège (1213) dans lequel peut être logé ledit outil de travail (21), de sorte que ledit outil de travail (21) et ladite hotte d'aspiration (12) sont solidaires.

3. Machine (M) pour le travail d'une pièce (P), telle qu'une pièce en bois, en plastique, en matériau composite ou similaire, comprenant
au moins un outil de travail (21), qui génère un jet de déchets (G) pendant ledit travail sur ladite pièce (P), et
au moins une unité d'aspiration (1) pour aspirer ledit jet de déchets (G), dans laquelle ladite unité d'aspiration (1) comprend une hotte d'aspiration (12) selon la revendication 1 ou 2.

4. Machine (M) selon la revendication précédente, **caractérisée**
**en ce que** ledit corps (121) définit un volume de collecte (V), et
**en ce que** ladite unité de diffusion (122) est disposée à l'intérieur dudit volume de collecte (V).

5. Machine (M) selon l'une quelconque des revendications précédentes 3 ou 4, **caractérisée**
**en ce que** ladite hotte d'aspiration (12) est disposée à proximité dudit outil de travail (21), et possède une ouverture d'entrée (1211), pour collecter ledit jet de déchets (G).

6. Machine (M) selon l'une quelconque des revendications précédentes revendications 3-5 **caractérisées**
**en ce que** ladite unité de diffusion (122) a une surface fendue (1223), pour diffuser ledit flux d'air comprimé (A), produire ledit flux diffusé (D) et l'orienter vers ladite surface de déflexion (S), en augmentant sa vitesse.

7. Machine (M) selon l'une quelconque des revendications précédentes 3-6, **caractérisée**
**en ce que** ladite unité de diffusion (122) comporte une chambre (1222).

8. Machine (M) selon l'une quelconque des revendications précédentes 3-7, **caractérisée**
**en ce que** ladite unité de diffusion (122) est intégrée dans ladite hotte d'aspiration (12).

9. Machine (M) selon l'une quelconque des revendications précédentes 3-8, **caractérisée**
**en ce que** ladite hotte d'aspiration (1) comprend
un conduit de sortie (13), relié à ladite ouverture de sortie (1212) dudit corps (121) de ladite hotte d'aspiration (12), et
une pompe (11) pour aspirer ledit jet de déchets (G), intercepté par ladite surface de déviation (S) et pour l'acheminer vers ledit conduit de sortie (13).

10. Machine (M) selon l'une quelconque des revendications précédentes 3-9, **caractérisée**
**en ce qu'**il comprend un plan de support (4) pour ladite pièce (P), et
**en ce que** ladite surface de déviation (S) dudit corps (121) de ladite hotte d'aspiration (12) est inclinée par rapport audit plan de support (4) de manière à dévier ledit jet de déchets (G) vers ladite ouverture de sortie (1212).

11. Machine (M) selon l'une quelconque des revendications 3-10 précédentes, **caractérisée**
**en ce que** ladite surface de déviation (S) dudit corps (121) de ladite hotte d'aspiration (12) est concave et est dirigée de manière à intercepter ledit jet de déchets (G) pour le dévier vers ladite ouverture de sortie (1212).

12. Machine (M) selon l'une quelconque des revendications 3-11 précédentes, caractérisée
en ce sens que ladite pièce (P) et ledit outil de travail (21) ont un mouvement relatif.

13. Machine (M) selon l'une quelconque des revendications précédentes 3-12, **caractérisée**
**en ce que** ledit corps (121) comporte un siège (1213) pour loger ledit outil de travail (21), de sorte que ledit outil de travail (21) et ladite hotte d'aspiration (12) sont solidaires.
